# FASCICULE DE BREVET EUROPEEN

(11) **EP 2 812 104 B1**
(45) Date de publication et mention de la délivrance du brevet: **14.08.2019**
(21) Numéro de dépôt: 13702660.5
(22) Date de dépôt: 07.02.2013
(51) Int. Cl.: B01D 1/18, B01D 9/00, B04C 9/00, B01J 2/04

(54) **PROCÉDÉ ET DISPOSITIF DE PRÉPARATION DE NANOPARTICULES PAR ÉVAPORATION FLASH**
VERFAHREN UND VORRICHTUNG ZUR HERSTELLUNG VON NANOTEILCHEN DURCH BLITZVERDAMPFUNG
PROCESS AND DEVICE FOR THE PREPARATION OF NANOPARTICLES BY FLASH EVAPORATION

(30) Priorité: 07.02.2012 FR 1251143
(43) Date de publication de la demande: 17.12.2014
(73) Titulaire: Centre National de la Recherche Scientifique (C.N.R.S.), 75016 Paris (FR); I.S.L. Institut Franco-Allemand de Recherches de Saint-Louis, 68300 Saint-Louis (FR)
(72) Inventeur: RISSE, Benedikt, 79227 Schallstadt (DE); HASSLER, Dominique, 68870 Bartenheim (FR); SPITZER, Denis, 67203 Oberschaeffolsheim (FR)
(74) Mandataire: Lavoix
(86) Numéro de dépôt international: PCT/EP2013/052478
(87) Numéro de publication internationale: WO 2013/117671

(56) Documents cités:
- WO-A1-2006/101352
- WO-A1-2007/028421
- WO-A1-2012/014923

## Description

L'invention concerne le domaine de la préparation de nanoparticules. En particulier, l'invention fournit un procédé et un dispositif permettant de préparer des nanoparticules organiques ou inorganiques par évaporation instantanée ou évaporation flash, par exemple pour la fabrication de nanoparticules d'engrais, de matières actives pharmaceutiques ou phytopharmaceutiques ou de matières énergétiques insensibles.

Le procédé selon l'invention comprend le chauffage d'une solution d'un composé organique ou inorganique à une température supérieure au point d'ébullition du solvant à pression standard, tout en évitant l'évaporation de ce solvant par action d'une forte pression sur la solution. L'atomisation de la solution après son passage dans une buse provoque la détente et l'évaporation du solvant en un temps extrêmement bref, de l'ordre de la fraction de seconde en général. L'évaporation du solvant provoque une supersaturation extrême des gouttelettes et le composé cristallise pour former des nanoparticules. Les nanoparticules peuvent alors être séparées, par exemple dans un dispositif de précipitation électrostatique ou au moyen d'un cyclone axial, ces dispositifs pouvant être associés. La séparation est effectuée à pression réduite.

Un des avantages du procédé selon l'invention est de permettre un contrôle de la taille des nanoparticules, en particulier en agissant sur la pression, la température, le solvant, la concentration ou selon la buse mise en oeuvre.

Des procédés de préparation de nanoparticules de composés existent.

Néanmoins, ces procédés connus ne permettent pas toujours d'atteindre des tailles de particules qui soient réellement submicroniques.

D'autres procédés connus ne permettent pas de préparer de grandes quantités de nanoparticules en des temps raisonnables. Les procédés connus ont souvent des capacités de production réduites, notamment du fait des difficultés rencontrées lors de la récupération des particules.

Ainsi, on connait différents procédés de préparation de nanoparticules dans un fluide supercritique, par exemple appliqué à des dérivés de caroténoïdes (DE-2943267) et à des dérivés protéiques (WO-2006/101352) ou pour le dépôt de film nanométrique (US-4734451, US-4970093). Ces documents décrivent la technologie RESS (Rapid Expansion of Supercritical Solutions) qui n'est efficace qu'à échelle réduite et ne peut donc être transférée au niveau industriel.

Un autre procédé décrit la préparation de nano- et microparticules, appliqué à des composés lipidiques par l'utilisation successive de deux fluides supercritiques (WO-2007/028421). Le premier fluide est utilisé pour préparer une solution comprenant ces dérivés lipidiques et le second fluide permet d'obtenir la dispersion de cette solution. Ce procédé décrit l'obtention de nano- et microparticules en modifiant la solubilité de la composition lipidique dans les deux fluides supercritiques.

L'un des inconvénients des procédés mettant en oeuvre des fluides supercritiques est qu'ils sont limités par la solubilité de la composition dans ces fluides supercritiques.

De plus, ces procédés de l'état de la technique ne permettent pas la préparation de nanoparticules composites avec un ratio des éléments du composite déterminé. En effet, le ratio des éléments du composite au sein de la solution initiale ne correspond pas au ratio des éléments du composite visé. Cette différence entre le ratio initial et le ratio final des éléments du composite provient des solubilités respectives des éléments du composite au sein de la solution initiale mise en oeuvre et traitée par le fluide supercritique.

De plus, ils ne peuvent être appliqués universellement, quelle que soit la nature de la composition.

On connait également la préparation de nanoparticules par brumisation au moyen de transducteurs (FR-2897281).

Enfin, un procédé de piégeage semi-continu de nanoparticules pour la purification d'eau est connu et intègre une étape d'évaporation (US-7628893).

Ainsi, il existe un besoin d'un procédé de préparation de nanoparticules qui apporte des solutions aux problèmes des procédés connus. L'invention concerne un procédé de préparation de nanoparticules qui apporte des solutions à tout ou partie des problèmes des procédés connus.

En particulier, le procédé selon l'invention est plus aisé à mettre en oeuvre car il utilise une solution et non un gaz comprimé et les pressions à atteindre sont moins élevées que pour les procédés en milieu supercritique.

De plus, le procédé selon l'invention permet la préparation en grande quantité de nanoparticules de très petites tailles et qui sont dispersées et ne s'agglomèrent pas.

De manière particulièrement avantageuse, le procédé selon l'invention peut être mis en oeuvre à une échelle industrielle.

Ainsi, l'invention fournit un procédé de préparation de nanoparticules, selon la revendication 1, dont au moins une dimension est inférieure à 100nm, d'au moins un composé, comprenant les étapes successives :
▪ préparation d'une solution comprenant au moins un composé organique ou minéral et au moins un solvant :
   - alimentation en ladite solution d'un réacteur d'un dispositif de cristallisation;
▪ chauffage de la solution, sous une pression allant de 3 à 300 bar, à une température supérieure au point d'ébullition du solvant ou à une température supérieure au point d'ébullition du mélange de solvants ;
▪ atomisation de la solution dans une chambre d'atomisation au moyen d'au moins un dispositif de dispersion et sous un angle allant de 30 à 150° à une pression allant de 0,0001 à 2 bar ;
▪ séparation du solvant sous forme gazeuse dans un dispositif de séparation du solvant de la chambre d'atomisation, ledit solvant étant éliminé au moyen d'une pompe à vide.

La taille des nanoparticules de composé préparées selon l'invention est submicronique pour au moins une des dimensions de ces particules, de préférence les nanoparticules préparées ont une taille allant de 2 à 100 nm, de manière plus préférée allant de 5 à 90 nm ou de 10 à 80 nm.

Le procédé selon l'invention convient à la préparation de nanoparticules de nombreux composés organiques ou inorganiques. En particulier, le procédé selon l'invention est particulièrement efficace et avantageux pour la préparation de nanoparticules de composés énergétiques, de composés pharmaceutiques, de composés phytopharmaceutiques, de composés colorants, de pigments, d'encres, de peintures, et d'oxydes métalliques.

De très nombreuses solutions comprenant au moins un composé organique ou minéral peuvent convenir pour le procédé selon l'invention.

De manière particulièrement avantageuse, le composé organique ou minéral est choisi parmi les composés solubles dans les solvants dont le point d'ébullition est inférieur à 80°C.

Le procédé selon l'invention peut être mis en oeuvre pour la préparation de nanoparticules en continu ou bien de manière semi-continue.

Le procédé selon l'invention comprend une étape finale de récupération des nanoparticules de composés. Cette récupération peut être effectuée au moyen d'un ou plusieurs dispositifs choisis parmi un séparateur électrostatique, un cyclone, un cyclone comprenant un dispositif électrostatique.

Pour augmenter la vitesse d'évaporation et en conséquence le degré de saturation, l'échauffement de la solution est effectué avant l'atomisation.

Pour le procédé selon l'invention, le chauffage est effectué au-delà du point d'ébullition du solvant et permet alors d'augmenter fortement la solubilité du composé dans le solvant choisi. Au sein de la solution surchauffée, la chaleur de vaporisation est emmagasinée sous forme d'énergie thermique.

Le procédé selon l'invention permet de faire varier le taux de solvant vaporisé selon le degré de surchauffe appliqué à la solution.

De très nombreux solvants peuvent convenir pour le procédé selon l'invention. Ils peuvent être utilisés seuls ou en mélange.

Les solvants préférés possèdent les propriétés suivantes :
- faible point d'ébullition ;
- faible enthalpie d'évaporation ;
- importante chaleur spécifique.

Parmi les solvants mis en oeuvre pour le procédé selon l'invention, on préfère les solvants dont le point d'ébullition est inférieur à 80°C, voire inférieur à 60°C.

Comme exemples de solvants, convenant pour le procédé selon l'invention, on peut citer les alcanes, par exemple le pentane (PE= 36°C) ou l'hexane (PE= 68°C) ; les alcools, par exemple le méthanol (PE= 65°C) ou l'éthanol (PE= 78-79°C) ; les thiols, par exemple l'éthane-thiol (PE= 35°C) ; les aldéhydes, par exemple l'éthanal (PE= 20°C) ou l'aldéhyde propionique (PE= 48°C) ; les cétones, par exemple l'acétone (PE= 56°C) ; les éthers, par exemple le méthyl-tert-butyl éther (PE= 55°C) ou le tetrahydrofurane (PE= 66°C) ; les esters d'acides, notamment les esters d'acide formique, par exemple le formiate de méthyle (PE= 32°C), les esters d'acide acétique, par exemple l'acétate de méthyle (PE= 57-58°C) ; les aminés, par exemple la triméthylamine (PE= 2-3°C).

Afin d'éviter l'évaporation trop rapide du solvant lors du chauffage de la solution, une forte surpression par rapport à la pression atmosphérique est appliquée à la solution. Ainsi, le chauffage de la solution est avantageusement effectué sous une pression allant de 5 à 150 bar, de préférence à une pression allant de 10 à 60 bar.

De manière avantageuse, la pression appliquée à la solution lors du chauffage est réalisée sous pression d'un gaz inerte, en particulier d'un gaz inerte choisi parmi l'azote, l'argon, l'hélium, le néon, le xénon. L'azote est préféré.

La diminution de la surpression cause l'évaporation instantanée du solvant selon une étape d'évaporation-flash effective en une fraction de seconde. Cette évaporation instantanée entraîne une telle sursaturation que le composé dissout dans le solvant cristallise immédiatement.

Cette cristallisation démarre donc au moment de l'atomisation de la solution dans la chambre d'atomisation. Cette atomisation de la solution est avantageusement réalisée à une pression allant de 0,001 à 2 bar.

De manière préférée, l'atomisation est réalisée au moyen d'un dispositif de dispersion qui est choisi parmi une buse à cône creux, une buse à cône plein, une buse à jet plat, une buse à jet rectiligne, un atomiseur pneumatique et leurs associations. Le dispositif préféré est une buse à cône creux.

Le procédé selon l'invention convient à l'atomisation de la solution dans une chambre d'atomisation au moyen d'au moins un dispositif de dispersion. L'atomisation est réalisée au moyen d'un nombre de dispositifs de dispersion compris entre 1 et 100, de manière avantageuse entre 1 et 50, de manière plus avantageuse entre 3 et 5.

De manière particulièrement avantageuse, notamment à l'échelle industrielle, le procédé selon l'invention peut mettre en oeuvre l'atomisation de la solution dans une chambre d'atomisation au moyen d'un nombre de dispositifs de dispersion supérieur ou égale à 100 dispositifs.

De manière également préférée, l'atomisation est réalisée sous un angle de 60 à 80°.

Suite à l'atomisation de la solution, la séparation des nanoparticules de la phase gazeuse est avantageusement réalisée dans un précipitateur électrostatique, dans un cyclone axial ou dans une combinaison d'un précipitateur électrostatique et d'un cyclone axial.

Le précipitateur électrostatique est mis en oeuvre à la pression atmosphérique tandis que le cyclone axial est mis en oeuvre à une pression inférieure à la pression atmosphérique.

De manière particulièrement avantageuse, la combinaison de deux cyclones axiaux en parallèle permet une production semi-continue de nanoparticules.

Un exemple de précipitateur électrostatique convenant pour le procédé selon l'invention est décrit dans FR-2897281 (page 4) et comprend un dispositif cylindrique comportant une électrode centrale et une électrode périphérique métallique. L'électrode centrale est un fil de faible diamètre et l'électrode périphérique est une électrode de cuivre. La différence de potentielle entre les deux électrodes se situe entre 5 et 20kV pour une distance d'environ 4 à 5cm.

Un exemple de cyclone axial convenant pour le procédé selon l'invention est décrit dans US-6969420, notamment les modes de réalisation 1 et 2 des exemples.

Un tel dispositif permet la séparation des nanoparticules en fonction de leur diamètre dynamique du fait du mouvement circulaire imposé aux particules à l'intérieur du cyclone. Les particules se retrouvent finalement collectées dans un réservoir ou vers une cassette porte-filtre.

Le solvant à l'état gazeux est éliminé, par exemple au moyen d'une pompe à vide. Il peut alors être récupéré ou recyclé.

Outre un procédé de préparation de nanoparticules, l'invention concerne un dispositif permettant la mise en oeuvre de ce procédé. Ainsi, l'invention fournit un dispositif de cristallisation de nanoparticules d'au moins un composé comprenant
▪ un réacteur comprenant
   - une alimentation en une solution du composé et d'au moins un solvant ;
   - un dispositif de mise sous pression de la solution du composé et du solvant sous pression pouvant aller de 3 à 300 bar ;
   - un dispositif de chauffage ;
▪ une chambre d'atomisation comprenant
   - au moins un dispositif de dispersion de la solution sous un angle allant de 30 à 150° et à une pression allant de 0,0001 à 2 bar ;
   - un dispositif de séparation du solvant éliminant le solvant sous forme gazeuse au moyen d'une pompe à vide ;
▪ un ou plusieurs dispositifs de récupération des nanoparticules de composé choisis parmi un séparateur électrostatique, un cyclone, un cyclone comprenant un dispositif électrostatique.

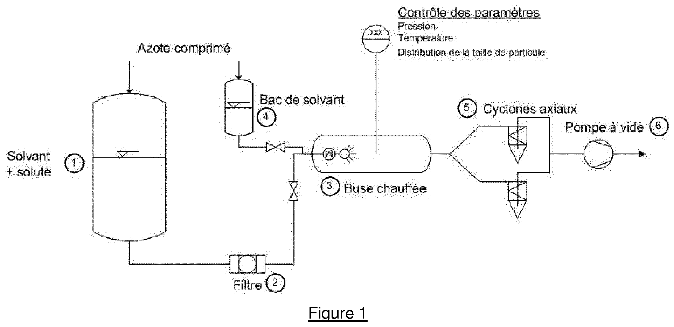

Un mode de mise en oeuvre d'un dispositif selon l'invention est représenté par la figure 1.

Le dispositif est composé de quatre parties principales : un réservoir (1) pour le stockage sous forte pression de la solution du solvant et du précurseur, une chambre d'atomisation comprenant une buse chauffée (3) intégrée, deux cyclones axiaux (5) montés en parallèle et permettant une production semi-continue, une pompe à vide (6).

Dans le réservoir (1) de 5 L contenant le solvant avec le soluté, on applique une surpression d'azote comprimé. Dans un premier temps, cette surpression permet de déplacer l'oxygène et empêche l'évaporation du solvant. Le débit volumique dans ce système est induit par la surpression d'azote comprimé.

Un filtre (2) de 15 µm refoule toutes les impuretés solides dans la solution initiale.

Une buse à cône creux (3), avec chauffage électrique, est installée dans la chambre d'atomisation. On contrôle les paramètres de pression, de température et de distribution de la taille des particules. Le type de branchement permet un changement rapide des buses. La température du chauffage électrique est choisie par l'utilisateur.

Un réservoir ou bac de solvant (4) est rempli avec le même solvant que le réservoir (1) et sert à rincer la conduite et la buse après utilisation.

Les cyclones axiaux (5) sont installés en parallèle. Pendant l'opération, seul un cyclone est en service ; le deuxième cyclone est en veille. Grâce à la force centrifuge, les particules solides se déposent à l'intérieur du cyclone, les composants gazeux quittent le cyclone par un tuyau plongeur. Pour vider le cyclone on ouvre d'abord le circuit conduisant vers le second cyclone, pour ensuite fermer le premier circuit conduisant vers le premier cyclone. La pompe à vide (6) assure un écoulement permanent dans l'installation et permet d'exfiltrer les vapeurs de solvant du système.

La préparation de nanoparticules selon l'invention va maintenant être décrite pour des modes de réalisation particuliers au moyen des exemples qui suivent.

### Exemple 1 : préparation de nanoparticules de bis-5-nitrotetrazolato tetra-amine cobalt perchlorate (BNCP)

On utilise le dispositif selon la figure 1.

4,3 g de BNCP (bis-5-nitrotetrazolato tetra-amine cobalt perchlorate) ont été dissous dans 2300 mL d'acétone. La solution a été chauffée à 160°C sous une pression de 20 à 25 bar. Au moyen d'une buse à cône creux, la solution a été dispersée dans une chambre d'atomisation sous un angle d'atomisation de 60°. La pression dans la chambre d'atomisation était de 5 mbar. La séparation des particules était effectuée au moyen d'un cyclone axial. La chambre d'atomisation et le cyclone axial ont été chauffés de l'extérieur à 100°C.

On obtient 2,3 g de nanoparticules de BNCP.

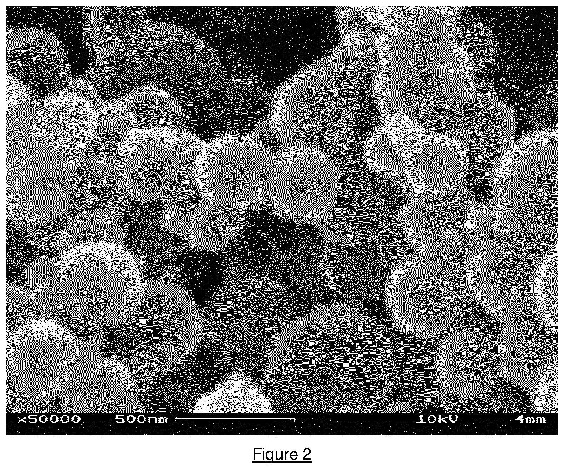

Les particules de BNCP produites sont de forme sphérique. La taille moyenne évaluée par analyse d'images en Microscope Electronique à Balayage (MEB) est de 300 ± 200 nm (figure 2).

Par ailleurs, il résulte de la nanocristallisation une désensibilisation du BNCP. En effet, par rapport au produit initial la nanocristallisation du BNCP permet une désensibilisation au frottement de 400 % et une désensibilisation à la décharge électrostatique (DES) de 65 % (voir tableau 1). La sensibilité à la friction est mesurée grâce à la méthode BAM (Bundesanstalt für Materialprüfung) avec un appareil de test à la friction type "Julius Peters". La sensibilité à la décharge électrostatique est mesurée avec un appareil de test à l'étincelle, modèle ESD 2008, OZM research s.r.o.

**Tableau 1**

| | Choc (J) | Frottement (N) | DES (mJ) |
|---|---|---|---|
| BNCP jaune | 1,56 | 20 | 120,74 |
| BNCP jaune et nanocristallisé | < 1,56 | 84 | 199,59 |

### Exemple 2 : préparation d'un composite de nanoparticules de cyclotriméthylènetrinitramine (RDX) et trinitrotoluène (TNT)

On utilise le dispositif selon la figure 1.

1,2 g de RDX (cyclotriméthylènetrinitramine) et 0,8 g de TNT (trinitrotoluène) ont été dissous dans 500 mL d'acétone. La solution a été chauffée à 150°C sous une pression de 25 bar. Au moyen d'une buse à cône creux, la solution a été dispersée dans une chambre d'atomisation sous un angle d'atomisation de 60°. La pression dans la chambre d'atomisation était de 5 mbar. La séparation des particules a été effectuée au moyen de deux cyclones axiaux en parallèle.

Après une heure, on obtient 0,75 g de nanoparticles composites RDX-TNT. La taille moyenne évaluée par analyse d'images est comprise entre 200 nm et 500 nm.

## Revendications

1. Procédé de préparation de nanoparticules, dont au moins une dimension est inférieure à 100nm, d'au moins un composé, comprenant les étapes successives :
▪ préparation d'une solution comprenant au moins un composé organique ou minéral et au moins un solvant ;
▪ alimentation en ladite solution d'un réacteur d'un dispositif de cristallisation ;
▪ chauffage de la solution, sous une pression allant de 3 à 300 bar, à une température supérieure au point d'ébullition du solvant ou à une température supérieure au point d'ébullition du mélange de solvants ;
▪ atomisation de la solution dans une chambre d'atomisation au moyen d'au moins un dispositif de dispersion (3) et sous un angle allant de 30 à 150° à une pression allant de 0,0001 à 2 bar ;
▪ séparation du solvant sous forme gazeuse dans un dispositif de séparation (5) du solvant de la chambre d'atomisation, ledit solvant étant éliminé au moyen d'une pompe à vide (6);
▪ récupération des nanoparticules d'au moins un composé cristallisé.

2. Procédé selon la revendication 1 **caractérisée en ce que** la récupération des nanoparticules de composé est réalisée au moyen d'un ou plusieurs dispositifs (5) choisis parmi un séparateur électrostatique, un cyclone, un cyclone comprenant un dispositif électrostatique.

3. Procédé selon les revendications 1 ou 2 qui est continu ou semi-continu.

4. Procédé selon les revendications 1 à 3 pour lequel le point d'ébullition du solvant ou du mélange de solvants est inférieur à 80°C.

5. Procédé selon les revendications 1 à 4 pour lequel le point d'ébullition du solvant ou du mélange de solvants est inférieur à 60°C.

6. Procédé selon les revendications 1 à 5 pour lequel le chauffage de la solution est effectué sous une pression allant de 5 à 150 bar.

7. Procédé selon les revendications 1 à 6 pour lequel le chauffage de la solution est effectué à une pression allant de 10 à 60 bar.

8. Procédé selon les revendications 1 à 7 pour lequel le chauffage de la solution est effectué sous pression d'un gaz inerte choisi parmi l'azote, l'argon, l'hélium, le néon, le xénon.

9. Procédé selon les revendications 1 à 8 pour lequel l'atomisation de la solution est réalisée à une pression allant de 0,001 à 2 bar.

10. Procédé selon les revendications 1 à 9 pour lequel le dispositif de dispersion (3) est choisi parmi une buse à cône creux, une buse à cône plein, une buse à jet plat, une buse à jet rectiligne, un atomiseur pneumatique et leurs associations.

11. Procédé selon les revendications 1 à 10 pour lequel l'atomisation est effectuée sous un angle de 60 à 80°.

12. Procédé selon les revendications 1 à 11 pour lequel le composé est choisi parmi les composés énergétiques, les composés pharmaceutiques, les composés phytopharmaceutiques, les composés colorants, les pigments, les encres, les peintures, les oxydes métalliques.

13. Procédé selon les revendications 1 à 12 pour lequel le solvant est choisi parmi les alcanes, par exemple le pentane (PE= 36°C) ou l'hexane (PE= 68°C) ; les alcools, par exemple le méthanol (PE= 65°C) ou l'éthanol (PE= 78-79°C) ; les thiols, par exemple l'éthane-thiol (PE= 35°C) ; les aldéhydes, par exemple l'éthanal (PE= 20°C) ou l'aldéhyde propionique (PE= 48°C) ; les cétones, par exemple l'acétone (PE= 56°C) ; les éthers, par exemple le méthyl-tert-butyl éther (PE= 55°C) ou le tetrahydrofurane (PE= 66°C) ; les esters d'acides, notamment les esters d'acide formique, par exemple le formiate de méthyle (PE= 32°C), les esters d'acide acétique, par exemple l'acétate de méthyle (PE= 57-58°C) ; les amines, par exemple la triméthylamine (PE= 2-3°C).

14. Procédé selon les revendications 1 à 13 pour la préparation de nanoparticules dont la taille va de 2 à 100 nm.

15. Dispositif de cristallisation de nanoparticules d'au moins un composé comprenant
▪ un réacteur comprenant
- une alimentation en une solution du composé et d'au moins un solvant ;
- un dispositif de mise sous pression de la solution du composé et du solvant permettant une pression allant de 3 à 300 bar ;
- un dispositif de chauffage ;
▪ une chambre d'atomisation comprenant
- au moins un dispositif de dispersion (3) de la solution sous un angle allant de 30 à 150° et permettant une pression allant de 0,0001 à 2 bar ;
- un dispositif de séparation (5) du solvant éliminant le solvant sous forme gazeuse au moyen d'une pompe à vide (6) ;
▪ un ou plusieurs dispositifs de récupération (2) des nanoparticules de composé choisis parmi un séparateur électrostatique, un cyclone, un cyclone comprenant un dispositif électrostatique.

## Patentansprüche

1. Verfahren zur Bereitstellung von Nanopartikeln, von denen wenigstens eine Abmessung kleiner als 100nm ist, aus wenigstens einer Verbindung, aufweisend die folgenden Schritte:
• Bereitstellen einer Lösung, die wenigstens eine organische oder mineralische Verbindung und wenigstens ein Lösungsmittel aufweist,
• Zuführen der Lösung an einen Reaktor einer Kristallisationsvorrichtung,
• Erwärmen der Lösung, unter einem Druck, der von 3 bis 300bar geht, auf eine Temperatur größer als der Siedepunkt des Lösungsmittels oder auf eine Temperatur größer als der Siedepunkt der Mischung von Lösungsmitteln,
• Zerstäuben der Lösung in einer Zerstäubungskammer mittels wenigstens einer Dispersionsvorrichtung (3) und unter einem Winkel, der von 30 bis 150° geht, bei einem Druck, der von 0,0001 bis 2 bar geht,
• Trennen des Lösungsmittels in gasförmiger Form in einer Vorrichtung zum Trennen (5) des Lösungsmittels von der Zerstäubungskammer, wobei das Lösungsmittel mittels einer Unterdruckpumpe (6) abgezogen wird,
• Gewinnen der Nanopartikel aus wenigstens einer kristallinen Verbindung.

2. Verfahren gemäß Anspruch 1, **dadurch gekennzeichnet, dass** das Gewinnen der Nanopartikel aus der Verbindung realisiert wird mittels einer oder mehrerer Vorrichtungen (5), die ausgewählt sind aus einem elektrostatischen Separator, einem Zyklon, einem Zyklon mit einer elektrostatischen Vorrichtung.

3. Verfahren gemäß Anspruch 1 oder 2, welches kontinuierlich oder semi-kontinuierlich ist.

4. Verfahren gemäß Ansprüchen 1 bis 3, wobei der Siedepunkt des Lösungsmittels oder der Mischung von Lösungsmitteln kleiner als 80°C ist.

5. Verfahren gemäß Ansprüchen 1 bis 4, wobei der Siedepunkt des Lösungsmittels oder der Mischung von Lösungsmitteln kleiner als 60°C ist.

6. Verfahren gemäß Ansprüchen 1 bis 5, wobei das Erwärmen der Lösung durchgeführt wird unter einem Druck, der von 5 bis 150 bar geht.

7. Verfahren gemäß Ansprüchen 1 bis 6, wobei das Erwärmen der Lösung durchgeführt wird bei einem Druck, der von 10 bis 60 bar geht.

8. Verfahren gemäß Ansprüchen 1 bis 7, wobei das Erwärmen der Lösung durchgeführt wird unter Druck eines Inertgases, das ausgewählt ist aus Stickstoff, Argon, Helium, Neon, Xeon.

9. Verfahren gemäß Ansprüchen 1 bis 8, wobei das Zerstäuben der Lösung realisiert wird bei einem Druck, der von 0,001 bis 2 bar geht.

10. Verfahren gemäß Ansprüchen 1 bis 9, wobei die Vorrichtung zum Zerstäuben (3) ausgewählt ist unter einer Hohlkegeldüse, einer Vollkegeldüse, einer Flachstrahldüse, einer Gradstrahldüse, einem pneumatischen Zerstäuber und deren Kombinationen.

11. Verfahren gemäß Ansprüchen 1 bis 10, wobei das Zerstäuben durchgeführt wird unter einem Winkel von 60 bis 80°.

12. Verfahren gemäß Ansprüchen 1 bis 11, wobei die Verbindung gewählt ist aus energetischen Verbindungen, pharmazeutischen Verbindungen, Pflanzenschutz-Verbindungen, Farbstoff-Verbindungen, Pigmenten, Tinten, Farben, Metalloxiden.

13. Verfahren gemäß Ansprüchen 1 bis 12, wobei das Lösungsmittel ausgewählt ist aus Alkanen, z.B. Pentan (PE= 36°C) oder Hexan (PE= 68°C), Alkoholen, z.B. Methanol (PE= 65°C) oder Ethanol (PE= 78-79°C), Thiolen, z.B. Ethan-Thiol (PE= 35°C), Aldehyden, z.B. Ethanal (PE= 20°C) oder propionisches Aldehyd (PE= 48°C), Ketonen, z.B. Azeton (PE= 56°C), Ethern, z.B. Methyl-Tert-Butyl-Ether (PE= 55°C) oder Tetrahydrofuran (PE= 66°C), Säureestern, insbesondere Ameisensäureestern, z.B. Methylformiat (PE= 32°C), Essigsäureestern, z.B. Methylazetat (PE= 57-58°C), Aminen, z.B. Trimethylamin (PE= 2-3°C).

14. Verfahren gemäß Ansprüchen 1 bis 13 für die Bereitstellung von Nanopartikeln, deren Größe von 2 bis 100nm geht.

15. Vorrichtung zur Kristallisation von Nanopartikeln aus wenigstens einer Verbindung, aufweisend
• einen Reaktor, der aufweist
∘ eine Zuführung einer Lösung aus der Verbindung und wenigstes eines Lösungsmittels,
∘ eine Vorrichtung zum Unter-Druck-Setzen der Lösung aus der Verbindung und dem Lösungsmittel, ermöglichend einen Druck, der von 3 bis 300 bar geht,
∘ eine Heizvorrichtung,
• eine Zerstäubungskammer, die aufweist
∘ wenigstens eine Vorrichtung zur Dispersion (3) der Lösung unter einem Winkel, der von 30 bis 150° geht und ermöglichend einen Druck, der von 0,0001 bis 2 bar geht,
∘ eine Vorrichtung zur Trennung (5) des Lösungsmittels, die das Lösungsmittel in gasförmiger Form mittels einer Unterdruckpumpe (6) abzieht,
• eine oder mehrere Vorrichtungen zur Gewinnung (2) der Nanopartikeln aus der Verbindung, die ausgewählt sind aus einem elektrostatischen Separator, einem Zyklon, einem Zyklon mit einer elektrostatischen Vorrichtung.

## Claims

1. A method for preparing nanoparticles of at least one compound, at least one dimension of the nanoparticles being smaller than 100nm, comprising the successive steps of:
▪ preparing a solution comprising at least one organic or mineral compound and at least one solvent;
▪ feeding said solution to a reactor of a crystallisation device;
▪ heating the solution under a pressure ranging from 3 to 300 bars at a temperature higher than the boiling point of the solvent or at a temperature higher than the boiling point of the solvent mixture;
▪ atomizing the solution in an spray drying chamber using at least one dispersion device (3) and at an angle ranging from 30 to 150° under pressure ranging from 0.0001 to 2 bars;
▪ separating the solvent in gaseous form in a separating device (5) of the solvent in the spray drying chamber, said solvent being eliminated by a vacuum pump;
▪ collecting nanoparticles of at least one crystallised compound.

2. The method according to claim 1, comprising a final step to recover the compound nanoparticles by means of one or several devices (5) selected from among an electrostatic separator, a cyclone, a cyclone comprising an electrostatic device.

3. The method according to claims 1 or 2, which is continuous or semi-continuous.

4. The method according to claims 1 to 3, wherein the boiling point of the solvent or mixture of solvents is lower than 80°C.

5. The method according to claims 1 to 4, wherein the boiling point of the solvent or mixture of solvents is lower than 60°C.

6. The method according to claims 1 to 5, wherein the heating of the solution is performed under pressure ranging from 5 to 150 bars.

7. The method according to claims 1 to 6, wherein the heating of the solution is performed under pressure ranging from 10 to 60 bars.

8. The method according to claims 1 to 7, wherein the heating of the solution is performed under pressure of an inert gas selected from among nitrogen, argon, helium, neon, xenon.

9. The method according to claims 1 to 8, wherein the atomization of the solution is conducted under pressure ranging from 0.001 to 2 bars.

10. The method according to claims 1 to 9, wherein the dispersion device (3) is selected from among a hollow cone nozzle, solid cone nozzle, flat jet nozzle, rectilinear jet nozzle, a pneumatic atomizer and the associations thereof.

11. The method according to claims 1 to 10, wherein atomization is performed at an angle of 60 to 80.

12. The method according to claims 1 to 11, wherein the compound is selected from among energetic compounds, pharmaceutical compounds, phytopharmaceutical compounds, dye compounds, pigments, inks, paints, metal oxides.

13. The method according to claims 1 to 12, wherein the solvent is selected from among alkanes e.g. pentane (bp = 36°C) or hexane (bp = 68°C); alcohols e.g. methanol (bp = 65°C) or ethanol (bp = 78-79°C); thiols, e.g. ethane-thiol (bp = 35°C); aldehydes e.g. ethanal (bp = 20°C) or propionic aldehyde (bp = 48°C); ketones e.g. acetone (bp = 56°C); ethers e.g. methyl-tert-butyl ether (bp = 55°C) or tetrahydrofuran (bp = 66°C); acid esters in particular formic acid esters e.g. methyl formiate (bp = 32°C), the esters of acetic acid e.g. methyl acetate (bp = 57-58°C); amines e.g. trimethylamine (BP = 2-3°C).

14. The method according to claims 1 to 13 for the preparation of nanoparticles having a size of 2 to 100 nm.

15. A device to crystallize the nanoparticles of at least one compound, comprising:
▪ a reactor comprising:
- a feed of a solution of the compound and at least one solvent;
- a pressurizing device of the solution of the compound and of the solvent at a pressure from 3 to 300 bars;
- a heating device;
▪ a spray drying chamber comprising:
- at least one dispersion device (3) to disperse the solution at an angle ranging from 30 to 150° and allowing a pressure ranging from 0.0001 to 2 bars;
- a solvent separating device (5) of the solvent eliminating the solvent under gaseous form by a vacuum pump;
▪ one or more devices (2) to recover the compound nanoparticles selected from among an electrostatic separator, a cyclone, a cyclone comprising an electrostatic device.
